# EUROPEAN PATENT APPLICATION

(11) **EP 4 819 324 A1**
(43) Date of publication of application: **07.10.2026**
(21) Application number: 26168624.0
(22) Date of filing: 27.03.2026
(51) Int. Cl.: H01M 50/209, H01M 50/258, H01M 50/262

(54) **ENERGY STORAGE APPARATUS**

(30) Priority: 31.03.2025 CN 202520597230 U
(71) Applicant: Shenzhen Anker Solix Technology Co., Ltd., Shenzhen City, Guangdong (CN)
(72) Inventor: ZHANG, Chunliang, Shenzhen (CN); ZENG, Anfu, Shenzhen (CN); XUE, Zhixiang, Shenzhen (CN); OUYANG, Yi, Shenzhen (CN)
(74) Representative: Steffens, Adrian

(57) **Abstract**

Disclosed is an energy storage apparatus including: a battery pack; a casing having an accommodating cavity (11) that accommodates the battery pack and enclosed by a top wall (12), a bottom wall (13), and a first side wall (14); a first docking portion including a first groove (31) which is formed by recessing from the top wall (12) toward the inside of the accommodating cavity (11); a second docking portion including a protruding block (41) which is formed by protruding from the bottom wall (13) toward the outside of the casing; a handle including a second groove (51) which is recessed from the first side wall (14) toward the first groove (31); and a fastener provided in the second groove (51) and configured to fix the first docking portion and the second docking portion. The energy storage apparatus is configured to be stacked on another energy storage apparatus, which may reduce the number of parts used in stacking, lower the costs, improve the inverter output power and battery capacity of the energy storage apparatus as needed, and meet different needs of users.

## Description

### Field

The present disclosure relates to the technical field of energy storage, in particular to an energy storage apparatus.

### Background

With the development of society, use of a household energy storage apparatus has become increasingly popular. Different users have different requirements for the usage needs and scenarios of the energy storage apparatus. For example, some require a larger inverter output power to meet needs of high-power electrical appliances; others need a larger battery capacity to achieve long-term endurance. Therefore, a stacking positioning structure needs to be designed on a casing of a battery pack.

In the related art, one solution is that the stacking between battery packs or battery packs and other modules is only clamped by limiting structures such as convex hulls and protrusions. The problem thereof is that the size of the system and individual modules in the stacking direction cannot be too large, or the modules cannot be stably fixed only by the limiting structures such as convex hulls and protrusions. Another solution is to add additional connecting pieces and screws for fastening on the basis of the above-mentioned solution, with the connecting pieces arranged around the mating surface of the casing. This solution increases the number of connecting piece parts and corresponding screws, leading to an increase in design and production costs of related parts and materials. Moreover, the installation cost and difficulty of the connecting piece parts and corresponding screws are high. Since the connecting pieces need to be pressed against the casing to achieve fixation, the area of the pressing area of the connecting pieces largely affects stability of the stacking. When the height of the module is large, the size of the connecting pieces needs to be increased correspondingly, which will occupy a large area of the casing and cause difficulties in structural design.

### Summary

An energy storage apparatus according to claim 1 is provided to solve the technical problems in the existing energy storage apparatuses that stability of stacking connection is poor and installation costs of the stacking method are high due to the influence of its own size, resulting in an impact on improvement of the inverter output power and battery capacity of the energy storage apparatus. The dependent claims refer to further embodiments.

In a first aspect, the present disclosure provides an energy storage apparatus including:
a battery pack composed of a plurality of batteries connected electrically;
a casing having an accommodating cavity that accommodates the battery pack and enclosed by a top wall, a bottom wall, and a first side wall, wherein the top wall and the bottom wall are provided opposite, and the top wall and the bottom wall are provided intersecting with the first side wall separately;
a first docking portion including a first groove which is formed by recessing from the top wall toward the inside of the accommodating cavity;
a second docking portion including a protruding block which is formed by protruding from the bottom wall toward the outside of the casing;
a handle including a second groove which is recessed from the first side wall toward the first groove; and
a fastener provided in the second groove and configured to fix the first docking portion and the second docking portion,
wherein the energy storage apparatus is configured to be stacked on another energy storage apparatus, and when the protruding block of the energy storage apparatus is fittingly connected with a first groove of another energy storage apparatus to form a limiting structure, one end of the fastener passes through the first groove of the limiting structure and is fixedly connected with the protruding block of the limiting structure.

In a possible implementation mode, the first groove is enclosed by a first abutting side surface and a first abutting bottom surface, and the protruding block preferably includes a second abutting side surface and a second abutting bottom surface which intersect. Preferably, when the energy storage apparatus is stacked on another energy storage apparatus, the first abutting side surface is in abutting connection with the second abutting side surface, and the first abutting bottom surface is in abutting connection with the second abutting bottom surface.

In a possible implementation mode, the first docking portion includes a second side wall which extends from the top wall toward the inside of the accommodating cavity, and the first groove and the second groove are respectively provided on two sides of the second side wall. Preferably, at least one or each of the following is provided: the second side wall is provided with a first connecting hole, two ends of the first connecting hole are respectively in communication with the first groove and the second groove, and the protruding block is provided with a second connecting hole, one end of the fastener passes through the first connecting hole and then fits with the second connecting hole to fix the limiting structure.

In a possible implementation mode, the first connecting hole is a through hole, the second connecting hole is a blind hole, and the fastener includes a screw, one end of which passes through the through hole and is threadedly connected with the blind hole.

In a possible implementation mode, the screw includes a first thread segment, and the blind hole is provided with a second thread segment fitting with the first thread segment, and the second thread segment includes a self-locking thread.

In a possible implementation mode, the fastener includes a pin, and one end of the pin passes through the first connecting hole and fits in the second connecting hole to fix the limiting structure.

In a possible implementation mode, an axial direction of the first connecting hole is inclined relative to the height direction of the casing, and/or an axial direction of the second connecting hole is inclined relative to the height direction of the casing; or
an axial direction of the first connecting hole is inclined relative to the length direction of the casing, and/or an axial direction of the second connecting hole is inclined relative to the length direction of the casing; or
an axial direction of the first connecting hole and an axial direction of the second connecting hole are inclined relative to the height direction of the casing, and/or an axial direction of the first connecting hole and an axial direction of the second connecting hole are inclined relative to the length direction of the casing.

In a possible implementation mode, at least two second grooves are provided, and the two second grooves are provided opposite in the length direction of the casing; at least two first grooves are provided, and the two first grooves are in one-to-one correspondence with the two second grooves. Preferably, at least two protruding blocks are provided, and the two protruding blocks are in one-to-one correspondence with the two first grooves; at least two sets of fasteners are provided, the two sets of fasteners are respectively provided in the two second grooves, and the two sets of fasteners each are configured to connect one set of the protruding block and the first groove.

In a possible implementation mode, the casing has a first end and a second end provided opposite in the length direction thereof, the first groove extends from the first end of the casing to the second end of the casing, and the first groove has a first length L1 in the length direction of the casing; and preferably two protruding blocks are provided, a maximum distance between the second abutting side surfaces of the two protruding blocks is L2, and L1 = L2.

In a possible implementation mode, the first docking portion includes a third side wall which extends from the top wall toward the inside of the accommodating cavity, the first groove and the second groove are respectively provided on two sides of the third side wall, the third side wall is provided with a first through groove, and two ends of the first through groove are respectively in communication with the first groove and the second groove.

In a possible implementation mode, the protruding block is provided with at least one second through groove which penetrates the protruding block along the length direction of the casing.

In a possible implementation mode, the fastener includes a first clamping member, a second clamping member, and an elastic member, one end of the elastic member is connected with the first clamping member, and the other end of the elastic member is connected with the second clamping member.

In a possible implementation mode, the first clamping member is clamped and connected with the first through groove, and the second clamping member is clamped and connected with the second through groove.

In a possible implementation mode, the first clamping member includes a support rod and a first sleeve that are connected, the second clamping member includes a clamping block and a second sleeve, the first sleeve is slidably sleeved on a peripheral side of the second sleeve, and the clamping block is provided at an end of the first sleeve away from the support rod.

In a possible implementation mode, the elastic member is provided in the first sleeve, one end of the elastic member is connected with the support rod, and the other end of the elastic member is fixedly connected with the clamping block.

The technical solutions provided by embodiments of the present disclosure have the following advantages as compared with the related art.

In the energy storage apparatus provided by embodiments of the present disclosure, during installation, first, the protruding block of the energy storage apparatus is fittingly connected with the first groove of another energy storage apparatus up and down to form a limiting structure which can limit displacement of the two casings in the horizontal direction. Then, one end of the fastener passes through the first groove of the limiting structure and is connected with the protruding block of the limiting structure, which may limit displacement of the second docking portion relative to the first docking portion in the height direction of the casing, realizing fixed connection between the two energy storage apparatuses, and improving stability of the connection between the two energy storage apparatuses. A plurality of energy storage apparatuses are connected in the above manner, thus improving the stacking stability of the plurality of energy storage apparatuses. When stacked, the plurality of energy storage apparatuses are not restricted by the size of the casing itself; users can improve the inverter output power and battery capacity of the energy storage apparatus as needed, meeting different needs of users. Compared with the related art, the energy storage apparatus of the present disclosure does not need to use an additional connecting piece, and the fastener may be fixed on the casing, which not only reduces the number of parts used in stacking and lowers production costs and installation costs of the parts, but also achieves stable and reliable stacking.

### Brief Description of the Drawings

Accompanying drawings, which are incorporated in and constitute a part of the specification, show embodiments according to the disclosure, and serve to explain principles of the disclosure together with the specification.

In order to more clearly describe technical solutions in embodiments of the present disclosure or the related art, drawings that need to be used in description of the embodiments or the related art are briefly introduced below, and it will be apparent in to those of ordinary skill in the art that other drawings can be obtained in accordance with these drawings without inventive work.

One or more embodiments are illustrated by figures in the corresponding drawings, which does not constitute limitation of the embodiments. Elements with the same reference numerals in the drawings represent similar elements, and the drawings do not constitute scale limitation unless otherwise specified.
- Fig. 1: is a schematic structural diagram of an energy storage apparatus provided by one embodiment of the present disclosure;
- Fig. 2: is a schematic diagram of a stacked state of energy storage apparatuses shown in Fig. 1;
- Fig. 3: is a cross-sectional view along an A-A direction in Fig. 2;
- Fig. 4: is a schematic structural diagram of an energy storage apparatus provided by another embodiment of the present disclosure;
- Fig. 5: is a cross-sectional view along a B-B direction in Fig. 4;
- Fig. 6: is a schematic structural diagram of an energy storage apparatus provided by yet another embodiment of the present disclosure;
- Fig. 7: is a side view of an energy storage apparatus shown in Fig. 6;
- Fig. 8: is a cross-sectional view along a C-C direction in Fig. 7;
- Fig. 9: is a three-dimensional view of an energy storage apparatus shown in Fig. 6;
- Fig. 10: is a schematic structural diagram of a fastener of an energy storage apparatus provided by still another embodiment of the present disclosure;
- Fig. 11: is a cross-sectional view along a D-D direction in Fig. 10;
- Fig. 12: is a schematic diagram of a stacked state of energy storage apparatuses provided by still another embodiment of the present disclosure; and
- Fig. 13: is a schematic diagram of a stacked state of energy storage apparatuses in the related art.

### Description of Reference Numerals:

1. Casing; 11. Accommodating cavity; 12. Top wall; 13. Bottom wall; 14. First side wall; 101. First end; 102. Second end;
2. Fastener; 21. Screw; 22. Pin; 23. First clamping member; 231. Support rod; 232. First sleeve; 24. Second clamping member; 241. Clamping block; 242. Second sleeve; 25. Elastic member;
3. First docking portion; 31. First groove; 311. First abutting side surface; 312. First abutting bottom surface; 32. Second side wall; 321. First connecting hole; 33. Third side wall; 331. First through groove;
4. Second docking portion; 41. Protruding block; 411. Second connecting hole; 412. Second abutting side surface; 413. Second abutting bottom surface; 414. Second through groove;
5. Handle; 51. Second groove;
6. Connecting piece.

### Detailed Description

In order to make objects, technical solutions, and advantages of embodiments of the disclosure clearer, the technical solutions in the embodiments of the disclosure will be clearly and fully described in combination with the accompanying drawings in the embodiments of the present disclosure. Obviously, the embodiments to be described are part of embodiments but not all embodiments of the disclosure. Based on the embodiments of the disclosure, all other embodiments obtained by those of ordinary skill in the art without inventive work shall fall within the scope of the disclosure.

Many different embodiments or examples are disclosed below to achieve different structures of the disclosure. In order to simplify the disclosure, components and arrangements of specific examples are described below. Of course, they are only exemplary and are not intended to limit the disclosure. Furthermore, the present disclosure may repeat reference numerals and/or letters in different examples. The repetition is for simplicity and clarity, and in itself does not indicate the relationship between the embodiments and/or arrangements discussed.

For the convenience of description, spatial relative relationship terms can be used herein to describe the relative positional relationship or movement status of one element or feature relative to another element or feature as shown in the drawings, such as "inside", "outside", "inner", "outer", "under", "below", "on", "above", "front" and "back". Such spatial relative relationship terms are intended to include different orientations of the device in use or operation other than orientations depicted in the drawings. For embodiment, if the device in the drawings has a position turnover, a posture change or a movement status change, these directional indications will change accordingly, for embodiment, elements described as "under or below other elements or features" will be subsequently oriented as "on or over other elements or features". Thus, the exemplary term "below" may include both orientations of above and below. The device may be otherwise oriented (rotated by 90 degrees or in other directions), and the spatial relative relationship description used herein are interpreted accordingly.

First, some technical terms of the present disclosure are explained as follows.

CAPTIVE SCREW: A captive screw is usually an assembly including a hand bolt, a riveted sleeve, and a screw. After special combination, different captive screw panel fasteners are formed, which achieve anti-loose by limiting relative movement between thread pairs or increasing difficulty of the relative movement.

BATTERY PACK: A battery pack refers to a battery system formed by combining multiple battery cells according to a certain configuration and connection method. This combination can provide higher voltage, capacity, or power output to meet the needs of specific applications.

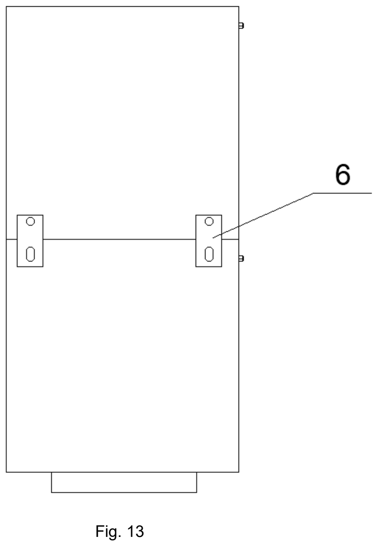

In the related art, one solution is that the stacking between battery packs or battery packs and other modules is only clamped by limiting structures such as convex hulls and protrusions. The problem thereof is that the size of the system and individual modules in the stacking direction cannot be too large, or the modules cannot be stably fixed only by the limiting structures such as convex hulls and protrusions. As shown in Fig.13, another solution is to add additional connecting pieces 6 and screws for fastening on the basis of the above-mentioned solution, with the connecting pieces 6 arranged around the mating surface of the casing. This solution increases the number of connecting piece parts 6 and corresponding screws, leading to high material costs and installation costs of the parts. Moreover, the installation cost and difficulty of the connecting piece parts 6 and corresponding screws are relatively high. Since the connecting pieces 6 need to be pressed against the casing to achieve fixation, the area of the pressing area of the connecting pieces largely affects stability of the stacking. When the height of the module is large, the size of the connecting pieces 6 needs to be increased correspondingly, which will occupy a large area of the casing and cause difficulties in structural design.

To solve the technical problems in the existing energy storage apparatuses that stability of stacking connection is poor and the installation costs are high due to the influence of its own size, resulting in an impact on improvement of the inverter output power and battery capacity of the energy storage apparatus. The present disclosure provides an energy storage apparatus which may reduce the number of parts used in stacking, lower the costs, achieve stable and reliable stacking, improve the inverter output power and battery capacity of the energy storage apparatus as needed, and meet different needs of users.

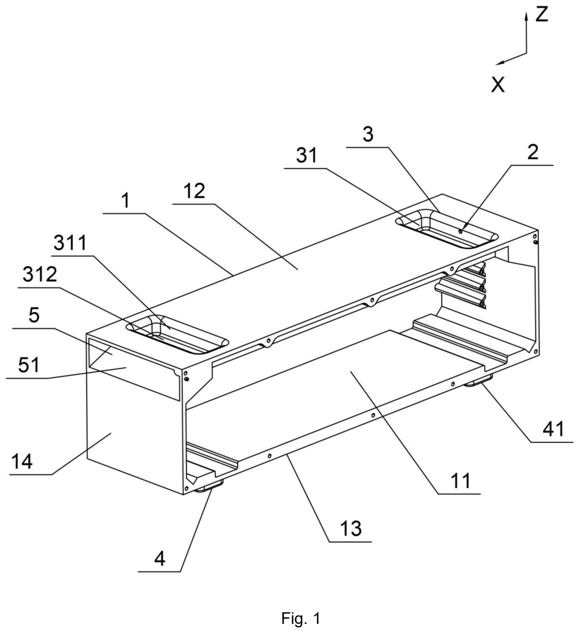

Fig. 1 shows an energy storage apparatus provided by the present disclosure, which includes a battery pack, a casing 1, a first docking portion 3, a second docking portion 4, a handle 5, and a fastener 2. The battery pack is composed of a plurality of batteries connected electrically; the casing 1 has an accommodating cavity 11 that accommodates the battery pack, and the casing 1 includes a top wall 12, a bottom wall 13, and a first side wall 14, where the top wall 12 and the bottom wall 13 are provided opposite, and the top wall 12 and the bottom wall 13 are provided intersecting with the first side wall 14 separately; the first docking portion 3 includes a first groove 31 which is formed by recessing from the top wall 12 toward the inside of the accommodating cavity 11; the second docking portion 4 includes a protruding block 41 which is formed by protruding from the bottom wall 13 toward the outside of the accommodating cavity 11; the first groove 31 and the protruding block 41 are configured to fit with each other; the handle 5 includes a second groove 51 which is recessed from the first side wall 14 toward the first groove 31; the fastener 2 is provided in the second groove 51, and is configured to fix the first docking portion 3 and the second docking portion 4; the energy storage apparatus is configured to be stacked on another energy storage apparatus. When the protruding block 41 of the energy storage apparatus is fittingly connected with the first groove 31 of another energy storage apparatus to form a limiting structure, one end of the fastener 2 passes through the first groove 31 of the limiting structure and is fixedly connected with the protruding block 41 of the limiting structure.

For the convenience of explanation and understanding, a height direction of casing 1 may be a Z direction shown in the drawings, and a length direction of the casing 1 may be an X direction shown in the drawings. Two sides of the casing 1 in the height direction are upper and lower respectively. It can be understood that when some application scenarios require expanding the battery capacity or output power, at least two casings 1 can be stacked up and down along their height directions.

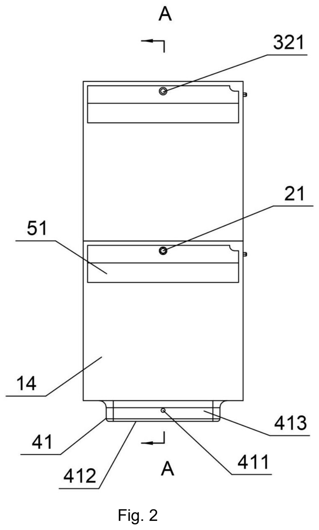

Exemplarily, a top wall 12 and a bottom wall 13 of the casing 1 are provided opposite in the height direction of the casing 1, so the first docking portion 3 and the second docking portion 4 are provided opposite in the height direction of the casing 1. As shown in Fig. 2, during installation, first, the energy storage apparatus is stacked on another energy storage apparatus, that is, the protruding block 41 of the energy storage apparatus is fittingly connected with the first groove 31 of the other energy storage apparatus up and down to form a limiting structure, thereby limiting displacement of the two energy storage apparatuses in a horizontal direction; for the convenience of explanation and understanding, the energy storage apparatus located below is called a first energy storage apparatus, and the energy storage apparatus located above is called a second energy storage apparatus. Then, one end of the fastener 2 passes through the first groove 31 of the first energy storage apparatus and is connected with the protruding block 41 of the second energy storage apparatus. The second groove 51 extends toward the first groove 31, so that the fastener 2 can smoothly fixedly connect the first groove 31 and the protruding block 41, thereby limiting displacement of the second docking portion 4 relative to the first docking portion 3 in the height direction of the casing 1, realizing fixed connection between the first energy storage apparatus and the second energy storage apparatus, and improving stability of the connection between the two energy storage apparatuses. Similarly, connecting a plurality of energy storage apparatuses in the above manner can improve the stacking stability of the plurality of energy storage apparatuses. When stacked, the plurality of energy storage apparatuses are not restricted by the size of the casing 1 itself, and users can improve the inverter output power and battery capacity of the energy storage apparatus as needed, meeting the different needs of users. Compared with the related art, the energy storage apparatus of the present disclosure does not need to use the additional connecting piece 6, which not only reduces the number of parts used in stacking and lowers the costs, but also achieves stable and reliable stacking.

In addition, as shown in Fig. 1, by providing the handle 5, on the one hand, the handle 5 can facilitate transportation of the casing 1; on the other hand, since the fastener 2 is provided in the second groove 51, the second groove 51 has sufficient operating space to install the fastener 2; the fastener 2 hid in the second groove 51 can also improve the overall aesthetics of the energy storage apparatus.

It should be noted that the shape of the casing 1 may be set as a cuboid or a cylinder, which is not specifically limited in the present disclosure.

In some embodiments, as shown in Fig. 1, the protruding block 41 has a first height in the height direction of casing 1, and the first groove 31 has a first depth in the height direction of casing 1; and the first height may be set equal to the first depth. The first groove 31 may be set as a circle, and the protruding block 41 is correspondingly set as a cylinder, so that the protruding block 41 can exactly fit into the first groove 31; the first groove 31 may be set as a square, and the protruding block 41 is correspondingly set as a cuboid, so that the protruding block 41 can exactly fit into the first groove 31; of course, the first groove 31 and the protruding block 41 may also be set in other shapes. It can be understood that when the energy storage apparatus is stacked on another energy storage apparatus, the energy storage apparatus located below is called a first energy storage apparatus, and the energy storage apparatus located above is called a second energy storage apparatus. Since the first height is equal to the first depth, the protruding block 41 of the second energy storage apparatus can stably fit into the first groove 31 of the first energy storage apparatus, thereby limiting the displacement of the second energy storage apparatus relative to the first energy storage apparatus in the horizontal direction. The top wall 12 of the first energy storage apparatus is in contact with the bottom wall 13 of the second energy storage apparatus, and the top wall 12 and the bottom wall 13 of the casing 1 may be separately set as planes. Such arrangement can increase the contact area between the two energy storage apparatuses, thereby improving the stacking stability of the plurality of energy storage apparatuses.

In some embodiments, as shown in Figs. 1 and 2, the first groove 31 is enclosed by a first abutting side surface 311 and a first abutting bottom surface 312, and the protruding block 41 includes a second abutting side surface 412 and a second abutting bottom surface 413 which intersect; when the energy storage apparatus is stacked on another energy storage apparatus, the first abutting side surface 311 is in abutting connection with the second abutting side surface 412, and the first abutting bottom surface 312 is in abutting connection with the second abutting bottom surface 413. Such arrangement can increase the contact area between the two energy storage apparatuses, thereby improving the stacking stability of the plurality of energy storage apparatuses.

In some embodiments, the first docking portion 3 includes a second side wall 32, which extends from the top wall 12 toward the inside of the accommodating cavity 11. The first groove 31 and the second groove 51 are respectively provided on two sides of the second side wall 32, and at least part of the first abutting side surface 311 of the first groove 31 is defined by the second side wall 32; the second side wall 32 is provided with a first connecting hole 321, two ends of the first connecting hole 321 are respectively in communication with the first groove 31 and the second groove 51, and the protruding block 41 is provided with a second connecting hole 411; one end of the fastener 2 passes through the first connecting hole 321 and then fits with the second connecting hole 411 to fix the limiting structure.

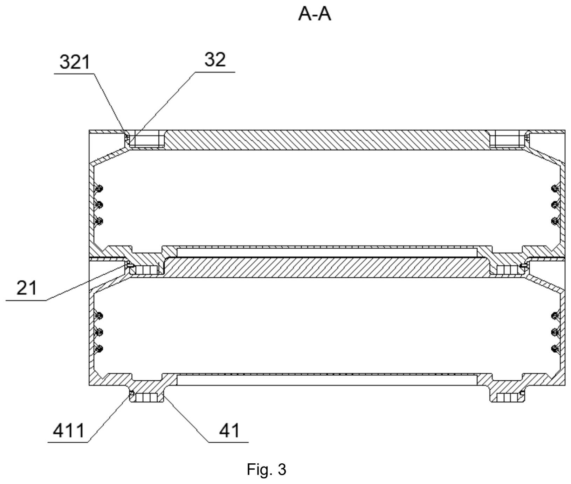

Specifically, in an embodiment, as shown in Figs. 2 and 3, the first connecting hole 321 is a through hole, the second connecting hole 411 is a blind hole, and the fastener 2 includes a screw 21; one end of the screw 21 passes through the through hole and is threadedly connected with the blind hole. It can be understood that during installation, first, the protruding block 41 of the energy storage apparatus is fittingly connected with the first groove 31 of another energy storage apparatus up and down to form a limiting structure which can limit displacement of the two casings 1 in the horizontal direction. Then, one end of the screw 21 passes through the through hole of the limiting structure and is threadedly connected with the blind hole of the limiting structure, realizing the fixed connection between the two energy storage apparatuses, improving the stacking stability of the plurality of energy storage apparatuses. When stacked, the plurality of energy storage apparatuses are not restricted by the size of the casing 1 itself; users can improve the inverter output power and battery capacity of the energy storage apparatus as needed, meeting different needs of users.

Further, the screw 21 includes a first thread segment, and the blind hole is provided with a second thread segment fitting with the first thread segment, and the second thread segment includes a self-locking thread. Specifically, a 30° wedge-shaped inclined surface is provided at a root of the second thread segment, which is the self-locking thread. When the first thread segment of the screw is tightened with the second thread segment of the blind hole, a tip of the screw 21 tightly butts the wedge-shaped inclined surface of the self-locking thread, thereby generating a large locking force. Due to the change in the angle of the thread form, a normal force generated by the contact between the threads forms an angle of 60° with an axis of the screw, instead of 30° like ordinary threads. Obviously, normal pressure of the self-locking thread is much greater than clamping pressure of the self-locking thread, so the generated anti-loose friction force inevitably greatly increases. That is to say, when a plurality of casings are stacked up and down, under the action of impact, vibration, or variable load, or when the temperature changes greatly, the friction force preventing relative movement is still maintained between the threads, thereby achieving the anti-loose effect and further improving the stacking stability of the plurality of casings 1.

It should be noted that the second side wall 32 may be provided with a plurality of first connecting holes 321, and correspondingly, the protruding block 41 is provided with a plurality of second connecting holes 411. The plurality of second connecting holes 411 are in one-to-one correspondence with the plurality of first connecting holes 321. During installation, a plurality of screws 21 can be connected correspondingly to improve the stacking stability. The first connecting hole may be set as a countersunk hole, so that a head of the screw 21 is embedded in the first connecting hole, avoiding exposure of the screw 21, preventing looseness of the screw 21, and improving aesthetics of the connection.

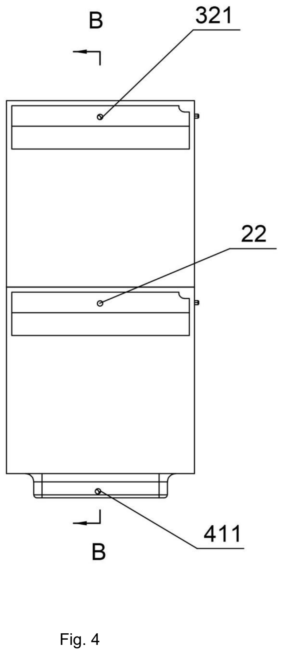

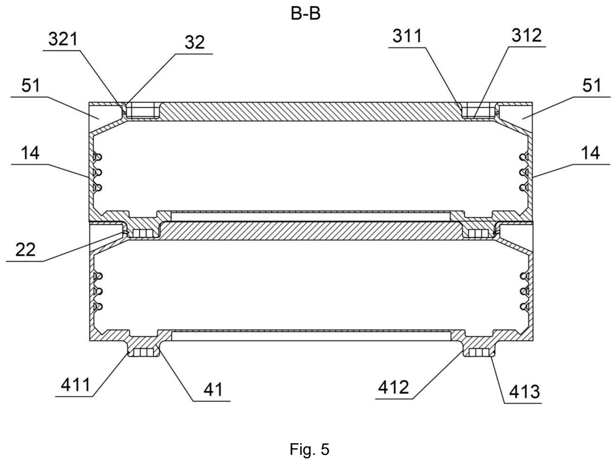

In an embodiment, as shown in Figs. 4 and 5, the fastener 2 includes a pin 22, and one end of the pin 22 passes through the first connecting hole 321 and fits in the second connecting hole 411 to fix the limiting structure. The pin 22 may be a cylindrical pin, a conical pin, or the like, and an interference fit can be designed between the pin 22 and the second connecting hole 411. It can be understood that during installation, first, the protruding block 41 of the energy storage apparatus is fittingly connected with the first groove 31 of another energy storage apparatus up and down to form a limiting structure, which can limit the displacement of the two casings 1 in the horizontal direction. Then, one end of the pin 22 passes through the first connecting hole 321 of the limiting structure and fits with the second connecting hole 411 of the limiting structure. The fixation of the limiting structure is realized by the friction force between the pin 22 and the second connecting hole 411, thereby realizing the fixed connection between the two casings 1, improving the stacking stability of the plurality of energy storage apparatuses. When stacked, the plurality of energy storage apparatuses are not restricted by the size of the casing 1 itself; users can improve the inverter output power and battery capacity of the energy storage apparatus as needed, meeting the different needs of users.

Further, an axial direction of the first connecting hole 321 is inclined relative to the height direction of the casing 1, and an axial direction of the second connecting hole 411 is inclined relative to the height direction of the casing 1. Preferably, one end of the pin 22 inserted into the second connecting hole 411 is inclined downward. First, the downward inclination can prevent the pin 22 from accidentally falling off under the action of impact, vibration, or variable load. Secondly, the pin 22 is provided with an assembly clearance. If the pin 22 is not inclined, when the upper casing 1 is lifted upward, the pin 22 may fall off in a direction away from the first accommodating cavity 11 due to the presence of the assembly clearance.

In addition, the axial direction of the first connecting hole 321 is inclined relative to the length direction of the casing 1, and the axial direction of the second connecting hole 411 is inclined relative to the length direction of the casing 1, that is, the pin 22 is also inclined in a front-back direction of the casing 1. Such arrangement can increase the area of the pin 22 subjected to a shear force when the upper casing 1 is lifted upward and avoid breakage of the pin 22. The inclination angle can also be increased to increase the shear area when the size is limited, thereby reducing a diameter of the pin 22. The inclination angle may be set within 5°. If structural design of the casing 1 of the energy storage apparatus is relatively special, the inclination angle can be flexibly adjusted according to actual needs.

In some embodiments, at least two second grooves 51 are provided, and the two second grooves 51 are provided opposite in the length direction of the casing 1; at least two first grooves 31 are provided, and the two first grooves 31 are in one-to-one correspondence with the two second grooves 51; at least two protruding blocks 41 are provided, and the two protruding blocks 41 are in one-to-one correspondence with the two first grooves 31; at least two sets of fasteners 2 are provided, the two sets of fasteners 2 are respectively provided in the two second grooves 51, and the two sets of fasteners 2 each are configured to connect one set of the protruding block 41 and the first groove 31. The first side walls 14 located on the left and right sides of the casing 1 are respectively provided with the second grooves 51. Providing two second grooves 51 facilitates transportation on the one hand and facilitates installation of the fasteners 2 on the other hand, thereby improving the stacking stability.

In an example, as shown in Fig. 3, first, the two protruding blocks 41 of the energy storage apparatus are fittingly connected with the two first grooves 31 of another energy storage apparatus up and down respectively. Then, one end of one screw 21 passes through the through hole on the left side of the first energy storage apparatus and is threadedly connected with the blind hole on the left side of the second energy storage apparatus, and at the same time, one end of the other screw 21 passes through the through hole on the right side of the first energy storage apparatus and is threadedly connected with the blind hole on the right side of the second energy storage apparatus. In another example, as shown in Fig. 5, first, the two protruding blocks 41 of the energy storage apparatus are fittingly connected with the two first grooves 31 of another energy storage apparatus up and down respectively. Then, one end of one pin 22 passes through the first connecting hole on the left side of the first energy storage apparatus and is in interference fit with the second connecting hole 321 on the left side of the second energy storage apparatus, and at the same time, one end of the other pin 22 passes through the first connecting hole 321 on the right side of the first energy storage apparatus and is in interference fit with the second connecting hole 411 on the right side of the second energy storage apparatus. Such arrangement can use two sets of fasteners 2 to connect the protruding blocks 41 from the left and right sides of the casing 1 respectively after the plurality of casings 1 are butted up and down, realizing the fixed connection between the two energy storage apparatuses and improving the stacking stability.

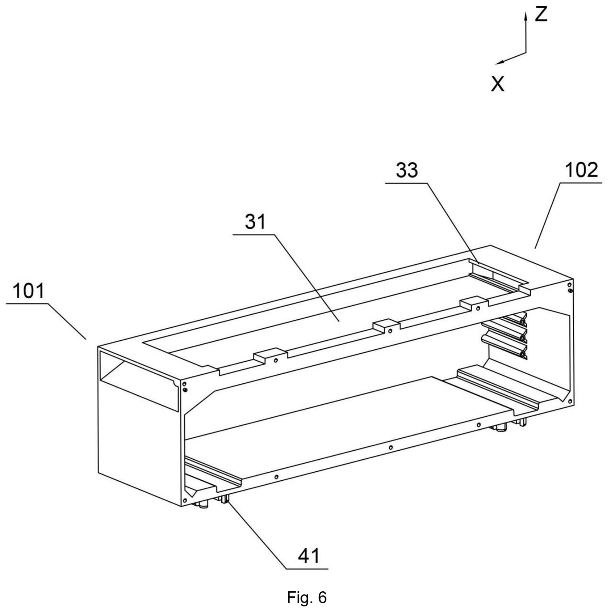

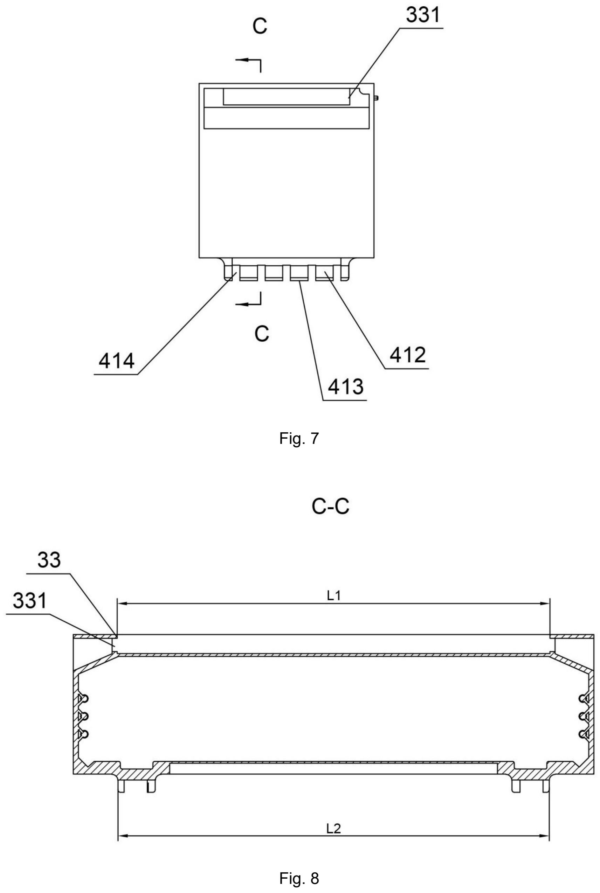

In an embodiment, as shown in Figs. 6 and 7, the casing 1 has a first end 101 and a second end 102 provided opposite in the length direction thereof. The first groove 31 extends from the first end 101 of the casing 1 to the second end 102 of the casing 1, and the first groove 31 has a first length L1 in the length direction of the casing 1; two protruding blocks 41 are provided, a maximum distance between the second abutting side surfaces 412 of the two protruding blocks 41 is L2, and L1 = L2. As shown in Fig. 8, it can be understood that after the protruding blocks 41 of the energy storage apparatus are fittingly connected with the first grooves 31 of another energy storage apparatus up and down, the second abutting side surfaces 412 of the two protruding blocks 41 of the second energy storage apparatus can be respectively in abutting connection with the first abutting side surfaces 311 of the first energy storage apparatus. Such arrangement can prevent the second energy storage apparatus from displacing in the horizontal direction relative to the first energy storage apparatus.

In addition, sizes of the protruding blocks 41 of the casings 1 of the battery packs from different manufacturers are designed to be different. The first groove 31 extends from the first end 101 of the casing 1 to the second end 102 of the casing 1, so that battery packs of most sizes available on the market can be stacked on the first groove 31 of the casing 1, which can be compatible with battery packs of different models, improving universality of the energy storage apparatus and better meeting different needs of users.

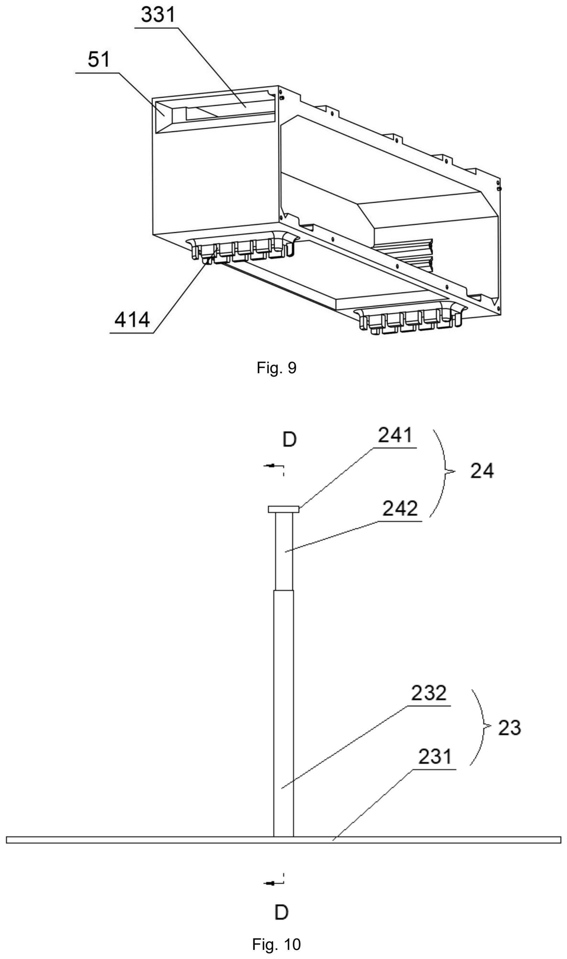

In an embodiment, as shown in Figs. 9 to 11, the first docking portion 3 includes a third side wall 33, which extends from the top wall 12 toward the inside of the accommodating cavity 11. The first groove 31 and the second groove 51 are respectively provided on two sides of the third side wall 33, at least a part of the first abutting side surface 311 of the first groove 31 is defined by the third side wall 33, the third side wall 33 is provided with a first through groove 331, and two ends of the first through groove 331 are respectively in communication with the first groove 31 and the second groove 51; the protruding block 41 is provided with at least one second through groove 414 which penetrates the protruding block 41 along the length direction of the casing 1; the fastener 2 includes a first clamping member 23, a second clamping member 24, and an elastic member 25. One end of the elastic member 25 is fixedly connected with the first clamping member 23, the other end of the elastic member 25 is fixedly connected with the second clamping member 24, the first clamping member 23 is clamped and connected with the first through groove 331, and the second clamping member 24 is clamped and connected with the second through groove 414. It can be understood that during installation, first, the protruding block 41 of the energy storage apparatus is fittingly connected with the first groove 31 of another energy storage apparatus up and down, thereby limiting the displacement of the two casings 1 in the horizontal direction; then, the first clamping member 23 is held and an external force is applied to the first clamping member 23, so that the second clamping member 24 slides relative to the first clamping member 23 toward the first through groove 331, and the first clamping member 23 is clamped and connected with the first through groove 331 of the first energy storage apparatus. At this time, the elastic member 25 is stretched under the action of external force; then the external force is released and the second clamping member 24 is loosed. Under the elastic restoring force of the elastic member 25, the second clamping member 24 automatically approaches the first clamping member 23 and is clamped and connected with the second through groove 414 of the second energy storage apparatus. Under the elastic force of the elastic member 25, the first clamping member 23 and the second clamping member 24 respectively provide a fastening force for the two casings 1, thereby realizing the fixed connection between the two energy storage apparatuses and improving the stacking stability of the plurality of energy storage apparatuses.

In addition, a plurality of second through grooves 414 are provided and are arranged at intervals. The casing 1 may take in air from the first through groove 331 on the side, and then the air enters the first groove 31 from the second through groove 414, which is conducive to heat dissipation of the battery pack, thereby improving the problem of easily overheating at the stacking position of the battery pack.

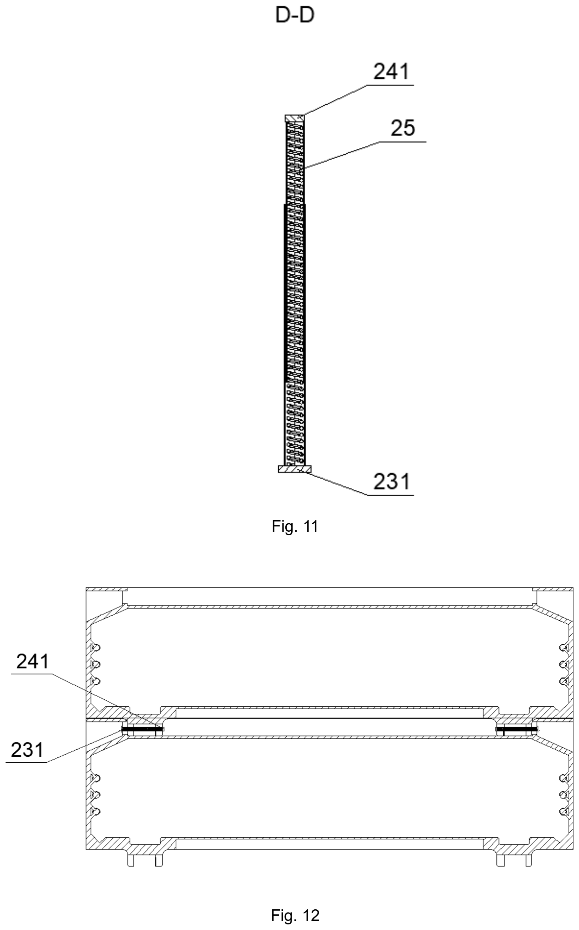

In an embodiment, as shown in Figs. 10 and 11, the first clamping member 23 includes a support rod 231 and a first sleeve 232 that are connected, the second clamping member 24 includes a clamping block 241 and a second sleeve 242, the first sleeve 232 is slidably sleeved on a peripheral side of the second sleeve 242, and the clamping block 241 is provided at an end of the first sleeve 232 away from the support rod 231. The elastic member 25 is provided in the first sleeve 232, one end of the elastic member is connected with the support rod 231, and the other end of the elastic member 25 is fixedly connected with the clamping block 241. The length direction of the support rod 231 and the axial direction of the first sleeve 232 may be perpendicular to each other, and the first sleeve 232 is slidably sleeved on the peripheral side of the second sleeve 242, that is, the distance between the clamping block 241 and the support rod 231 can be adjusted. It can be understood that during installation, as shown in Fig. 12, first, the protruding block 41 of the energy storage apparatus is fittingly connected with the first groove 31 of another energy storage apparatus up and down to form a limiting structure, thereby limiting the displacement of the two casings 1 in the horizontal direction; then, the first sleeve 232 is held and an external force is applied to the second sleeve 242, so that the second sleeve 242 slides relative to the first sleeve 232, and the clamping block 241 is away from the support rod 231, at which time, the elastic member 25 is stretched; then, the clamping block 241 passes from the second groove 51 through the first through groove 331 of the limiting structure and the second through groove 414 of the limiting structure in sequence, and extends into the first groove 31 of the first energy storage apparatus; and the first sleeve 232 is rotate, so that the clamping block 241 hooks the protruding block 41 of the second energy storage apparatus; the length of the support rod 231 is greater than the length of the first through groove 331, so the support rod 231 can be clamped and connected with the second side wall 33 of the first energy storage apparatus. Under the elastic force of the elastic member 25, the clamping block 241 moves the support rod 231, thereby providing a fastening force for the casing 1 and improving the stacking stability of the plurality of casings 1.

It should be noted that the elastic member 25 may be a spring or an elastic rod made of elastic material, which is not specifically limited in the present disclosure.

Of course, other types of battery packs can be stacked on the first groove 31 of the casing 1. As long as the clamping block 241 can hook the protruding block 41 or other protruding structures at the bottom of the battery pack, fixation can be achieved.

It should be understood that the terms used herein are only for the purpose of describing specific exemplary embodiments and are not intended to be limiting. Unless the context clearly indicates otherwise, the singular forms "a", "an" and "the" as used herein can also mean including plural forms. The terms "include", "contain", "comprise" and "have" are inclusive and thus indicate the presence of features, steps, operations, elements and/or components described, but do not exclude the presence or addition of one or more other features, steps, operations, elements, components, and/or combinations thereof. The method steps, procedures, and operations described herein are not interpreted as necessarily requiring them to be executed in the specific order described, unless the execution order is explicitly indicated. It should also be understood that additional or alternative steps may be used.

Although a plurality of elements, components, regions, layers and/or sections can be described herein with the terms first, second, third, and the like, these elements, components, regions, layers and/or sections should not be limited by these terms. These terms may be only used to distinguish one element, component, region, layer or section from another ones. Terms such as "first" and "second" and other numerical terms do not imply sequence or order when used herein unless clearly indicated in the context. Accordingly, the first element, component, region, layer or section discussed below may be referred to as a second element, component, region, layer or section without departing from teachings of the exemplary embodiments.

The foregoing description is only the detailed description of embodiments of the disclosure to enable a person skilled in the art to understand or implement the disclosure. Various modifications to these embodiments will be apparent to a person skilled in the art, and general principles defined herein may be implemented in other embodiments without departing from the scope of the disclosure. Thus, the disclosure is not limited to the embodiments described herein, but shall conform to the widest scope consistent with the principles and novel characteristics claimed herein.

## Claims

1. An energy storage apparatus comprising:
- a battery pack composed of a plurality of batteries connected electrically;
- a casing having an accommodating cavity (11) that accommodates the battery pack and enclosed by a top wall (12), a bottom wall (13), and a first side wall (14), wherein the top wall (12) and the bottom wall (13) are provided opposite, and the top wall (12) and the bottom wall (13) are provided intersecting with the first side wall (14) separately;
- a first docking portion comprising a first groove (31) which is formed by recessing from the top wall (12) toward the inside of the accommodating cavity (11);
- a second docking portion comprising a protruding block (41) which is formed by protruding from the bottom wall (13) toward the outside of the casing;
- a handle comprising a second groove (51) which is recessed from the first side wall (14) toward the first groove (31); and
- a fastener provided in the second groove (51) and configured to fix the first docking portion and the second docking portion,
- wherein the energy storage apparatus is configured to be stacked on another energy storage apparatus, and when the protruding block (41) of the energy storage apparatus is fittingly connected with a first groove (31) of another energy storage apparatus to form a limiting structure, one end of the fastener passes through the first groove (31) of the limiting structure and is fixedly connected with the protruding block (41) of the limiting structure.

2. The energy storage apparatus of claim 1, wherein the first groove (31) is enclosed by a first abutting side surface (311) and a first abutting bottom surface (312), and the protruding block (41) comprises a second abutting side surface (412) and a second abutting bottom surface (413) which intersect;
- when the energy storage apparatus is stacked on another energy storage apparatus, the first abutting side surface (311) is in abutting connection with the second abutting side surface (412), and the first abutting bottom surface (312) is in abutting connection with the second abutting bottom surface (413).

3. The energy storage apparatus of claim 2, wherein the first docking portion comprises a second side wall (32) which extends from the top wall (12) toward the inside of the accommodating cavity (11), and the first groove (31) and the second groove (51) are respectively provided on two sides of the second side wall (32); the second side wall (32) is provided with a first connecting hole (321), two ends of the first connecting hole (321) are respectively in communication with the first groove (31) and the second groove (51), and the protruding block (41) is provided with a second connecting hole (411); one end of the fastener passes through the first connecting hole (321) and then fits with the second connecting hole (411) to fix the limiting structure.

4. The energy storage apparatus of claim 3, wherein the first connecting hole (321) is a through hole, the second connecting hole (411) is a blind hole, and the fastener comprises a screw (21), one end of which passes through the through hole and is threadedly connected with the blind hole.

5. The energy storage apparatus of claim 4, wherein the screw (21) comprises a first thread segment, and the blind hole is provided with a second thread segment fitting with the first thread segment, and the second thread segment comprises a self-locking thread.

6. The energy storage apparatus of any one of claims 3 to 5, wherein the fastener comprises a pin (22), and one end of the pin (22) passes through the first connecting hole (321) and fits in the second connecting hole (411) to fix the limiting structure.

7. The energy storage apparatus of any one of claims 3 to 6, wherein an axial direction of the first connecting hole (321) is inclined relative to the height direction of the casing, and an axial direction of the second connecting hole (411) is inclined relative to the height direction of the casing.

8. The energy storage apparatus of any one of claims 3 to 6, wherein an axial direction of the first connecting hole (321) is inclined relative to the length direction of the casing, and an axial direction of the second connecting hole (411) is inclined relative to the length direction of the casing.

9. The energy storage apparatus of any one of claims 3 to 6, wherein an axial direction of the first connecting hole (321) and an axial direction of the second connecting hole (411) are inclined relative to the height direction of the casing, and an axial direction of the first connecting hole (321) and an axial direction of the second connecting hole (411) are inclined relative to the length direction of the casing.

10. The energy storage apparatus of any one of claims 2 to 9, wherein at least two second grooves (51) are provided, and the two second grooves (51) are provided opposite in the length direction of the casing; at least two first grooves (31) are provided, and the two first grooves (31) are in one-to-one correspondence with the two second grooves (51); at least two protruding blocks (41) are provided, and the two protruding blocks (41) are in one-to-one correspondence with the two first grooves (31); at least two sets of fasteners are provided, the two sets of fasteners are respectively provided in the two second grooves (51), and the two sets of fasteners each are configured to connect one set of the protruding block (41) and the first groove (31).

11. The energy storage apparatus of any one of claims 2 to 10, wherein the casing has a first end (101) and a second end (102) provided opposite in the length direction thereof, the first groove (31) extends from the first end (101) of the casing to the second end (102) of the casing, and the first groove (31) has a first length L1 in the length direction of the casing; and
- two protruding blocks (41) are provided, a maximum distance between the second abutting side surfaces (412) of the two protruding blocks (41) is L2, and L1 = L2.

12. The energy storage apparatus of claim 11, wherein the first docking portion comprises a third side wall (33) which extends from the top wall (12) toward the inside of the accommodating cavity (11), the first groove (31) and the second groove (51) are respectively provided on two sides of the third side wall (33), the third side wall (33) is provided with a first through groove, and two ends of the first through groove are respectively in communication with the first groove (31) and the second groove.

13. The energy storage apparatus of claim 12, wherein:
- the protruding block (41) is provided with at least one second through groove which penetrates the protruding block (41) along the length direction of the casing; and
- the fastener comprises a first clamping member (23), a second clamping member (24), and an elastic member (25), one end of the elastic member (25) is connected with the first clamping member (23), and the other end of the elastic member (25) is connected with the second clamping member (24); the first clamping member (23) is clamped and connected with the first through groove, and the second clamping member (24) is clamped and connected with the second through groove.

14. The energy storage apparatus of claim 13, wherein the first clamping member (23) comprises a support rod (231) and a first sleeve (232) that are connected, the second clamping member (24) comprises a clamping block (241) and a second sleeve (242), the first sleeve (232) is slidably sleeved on a peripheral side of the second sleeve (242), and the clamping block (241) is provided at an end of the first sleeve (232) away from the support rod (231).

15. The energy storage apparatus of claim 14, wherein the elastic member (25) is provided in the first sleeve (232), one end of the elastic member (25) is connected with the support rod (231), and the other end of the elastic member (25) is fixedly connected with the clamping block (241).
